# EUROPEAN PATENT APPLICATION

(11) **EP 3 964 463 A1**
(43) Date of publication of application: **09.03.2022**
(21) Application number: 20194837.9
(22) Date of filing: 07.09.2020
(51) Int. Cl.: B65H 5/02, B65H 5/04, B23K 26/08, B23K 26/38, B65G 15/52, B23K 37/04, B65G 17/00

(54) **SUPPORT DEVICE FOR STORING OR TRANSPORTING SINGLE SHEETS OR STACKS OF A PACKAGING MATERIAL AND CONVEYOR BELT ASSEMBLY**

(71) Applicant: BOBST MEX SA, 1031 Mex (CH)
(72) Inventor: VALTERIO, Roberto, 1867 Ollon (CH); ROULIN, Yannick, 1304 Cossonay-Ville (CH)
(74) Representative: Hasler, David

(57) **Abstract**

A support device (14) for storing or transporting single sheets or stacks of a packaging material is described. The support device (14) comprises a basic component (20) and a multitude of slats (28) being mounted on the basic component (20). The slats (28) are arranged in an upright position and spaced from each other such that respective side contour contact sections (34) of the slats (28) form a substantially flat support surface (16). The multitude of slats (28) comprises at least two different types of slats (28a, 28b, 28c), each slat (28) being provided with at least one indicator (44a, 44b, 44c, 50a, 50c) indicating its type. Furthermore, a conveyor belt assembly is presented. It comprises at least one conveyor belt, wherein one or more such support devices (14) is/are mounted on the conveyor belt in order to transport single sheets or stacks of packaging material.

## Description

The invention is directed to a support device for storing or transporting single sheets or stacks of a packaging material. It comprises a basic component having the form of a U-shaped profile comprising a base section, a first leg section and a second leg section, wherein the first leg section and the second leg section extend from opposite ends of the base section respectively. A multitude of slats are mounted on the basic component. The slats are arranged in an upright position and spaced from each other such that respective side contour contact sections of the slats form a substantially flat support surface configured for supporting the single sheets or stacks of packaging material.

The invention additionally relates to a conveyor belt assembly comprising at least one conveyor belt, wherein one or more such support devices is/are mounted on the conveyor belt in order to transport single sheets or stacks of packaging material and wherein a conveying direction is generally perpendicular to a direction of general extension of the basic component.

Such support devices and conveyor belt assemblies equipped therewith are known in the art. Furthermore, a known problem in connection with support devices of the type mentioned above lies in the arrangement of the side contour contact sections of the slats forming the support surface. Depending on the process to be performed on the single sheet or stack of a packaging material supported by the support device it is undesirable that the side contour contact sections are arranged inside or in the vicinity of a processing zone. This can best be illustrated when the support device is used in a conveyor belt assembly of a laser cutting machine. In such a case it is desirable that the packaging material is cut in a region between respective side contour contact sections in order to allow for a cutting result of high quality, i.e. it is to be avoided to cut portions of the packaging material lying directly above a side contour contact section. This is especially relevant when cutting in parallel to a conveying direction or perpendicular to the conveying direction. Known approaches to this problem suggest arranging the side contour contact sections with a certain irregularity or deviation from standard processing zones and/or standard processing directions. However, this leads to an increased complexity in the manufacturing of the support devices which is also undesirable.

The objective of the present invention is thus to improve known support devices in that they are universally usable, i.e. usable in connection with a certain variety of processing zones and/or processing directions. At the same time the support devices shall be structurally simple and easy to manufacture.

The problem is solved by a support device of the type mentioned above, wherein on the first leg section and on the second leg section a plurality of identical mounting slots are provided respectively, and the multitude of slats is mounted on the basic component such that a portion of each of the slats is received in one of the mounting slots on the first leg section and one of the mounting slots on the second leg section. Furthermore, the multitude of slats comprises at least two different types of slats, each slat being provided with at least one indicator indicating its type. In this context slats of different type are to be understood as slats differing in their geometry. Mounting a slat in different orientations does not produce different types of slats. Since the mounting slots are all identical, the basic component is structurally simple. Furthermore, it can be manufactured in a simple and efficient manner. Since different types of slats are used, the support device is usable in connection with a wide variety of processing zones and/or processing directions. The side contour contact sections are especially arranged relatively far apart along a direction of general extension of the basic component and a direction perpendicular thereto. At the same time the support device can be easily manufactured due to the indicators. Using the indicators the correct mounting of the slats on the basic component can be verified visually and/or automatically.

The number of slats used in a support device may be freely chosen depending on the specific application. Exemplary support devices comprise 50 to 300 slats, preferably 120 to 150 slats.

When speaking about a substantially flat support surface the virtual plane, formed by the side contour contact sections is meant. The purpose thereof is to support the sheet or the stack in a flat manner, i.e. without bending or kinking the sheets.

The support device according to the invention is preferably used in or in conjunction with a laser cutting machine.

According to a preferred embodiment, the slats are made of a steel material, especially from a stainless steel material.

Preferably, the side contour contact sections of the slats comprise teeth, wherein the tips of the teeth form the substantially flat support surface. In this case, the at least two different types of slats may differ in the arrangement of the teeth along the respective slat. The teeth may alternatively be called needles. The contact area between a slat without teeth and a packaging material is substantially a line or a narrow but long rectangle. By introducing teeth, the contact area is shrunk to a plurality of point contacts or very short line contacts, wherein all point contacts provided by one slat are arranged on a straight line or a section of a circle. Consequently, the area of contact is further reduced, which leads to an increased portion of open space underneath a sheet or a stack of packaging material supported by the support device. Consequently, restrictions on the location of a processing zone and/or a processing direction are reduced.

According to an advantageous embodiment, the teeth are cut, embossed or stamped on the slats. Using these methods teeth can be produced in an economical and precise manner.

The at least two different types of slats can differ with respect to a starting position of a respective tooth pattern. The tooth pattern is understood as the collectivity of teeth of the slat. Especially, the tooth pattern as such is identical for both types of slats. Consequently, the slats can be produced in an efficient manner.

Advantageously, the teeth of neighboring slats are shifted with respect to each other when being regarded along a direction of general extension of the basic component. Thus, for all processing zones and processing directions the teeth are arranged relatively far apart from one another. In doing so, the arrangement of process zones and/or processing directions is not disturbed.

According to an embodiment, slats of at least one type comprise teeth being arranged symmetrically with respect to a slat middle axis. The slat middle axis is defined as a substantially vertical axis being arranged at a center of the slat when it is mounted on the basic component. Thus, in a side view the vertical axis separates the slat in two halves of equal length. Such a slat can be mounted in two orientations on the basic component, wherein the arrangement of the teeth is independent from the orientation of the slat, i.e. the position of the teeth does not change with respect to the basic component when the orientation of the slat is altered.

In such a configuration, two identical indicators may be provided on opposite ends of the slat respectively. Consequently, independent from the orientation of the slat at least one of the indicators is easily visible such that the type of the slat can be verified.

In a further embodiment, slats of at least one type comprise teeth being arranged non-symmetrically with respect to a slat middle axis. Especially, slats of at least two types comprise teeth being arranged non-symmetrically with respect to a slat middle axis. For such slats the arrangement of the teeth with respect to the basic component may be altered by altering the orientation of the slat in which it is mounted to the basic component.

Slats of a type comprising teeth which are arranged non-symmetrically with respect to the slat middle axis may be mountable on the basic component in two orientations. Thus, an arrangement comprising teeth being shifted with respect to each other when being regarded along a direction of general extension of the basic component can be easily created. Thus, along every processing direction the teeth are spaced apart from another. Consequently, processing zones and/or processing directions may be chosen independently from the design of the support device.

In such a configuration, two different indicators can be provided each of which corresponds to one orientation in which the slat is mountable. Consequently, the orientation of the slat can be additionally derived from the indicators. This is especially helpful when the orientation is difficult to derive from the pure geometry of the slat.

In a variant the indicator comprises one or more notches being positioned at a lateral edge of the respective slat when being regarded in its mounted position. Such an indicator is thus visible from the side of the support device. Additionally, a sequence of types of slats can be easily verified by such indicators. Furthermore, the notches can be produced with a comparatively low effort.

A type of slat can be indicated by a corresponding number of notches. A first type of slat may be indicated by one single notch, a second type by two adjacent notches etc. Such indicators are easy to manufacture and easy to verify either visually or automatically.

Alternatively, each indicator comprises one single notch, wherein a type of slat is indicated by a corresponding width or position of the notch. Such indicators are especially easy in production since only a single notch needs to be produced. Still they are easily detectable visually or automatically.

All slats may be arranged on the basic component in a substantially parallel manner, especially wherein the slats extend obliquely with respect to a direction of general extension of the basic component. Thus, the slats form a kind of grid suitable for supporting packaging material and thereby avoiding bends or kinks in the packaging material. At the same time, especially when compared to a continuous support surface, the contact area between packaging material and the support device is very small. When arranging the slats in an oblique manner, the risk that a process needs to be performed in close proximity to the side contour contact sections or even follows them is significantly reduced. In this context the term obliquely is to be understood as neither orthogonal neither parallel. In this context, the slats may be tilted by an angle of 0,5° to 15°, preferably by an angle of 0,5 ° to 5°, with respect to an standard orientation being substantially perpendicular to the direction of general extension of the basic component.

In order to allow for an oblique positioning of the slats, the mounting slot on the first leg section may be offset from a mounting slot on the second leg section with respect to the direction of general extension of the basic component.

The problem is additionally solved by a conveyor belt assembly of the type mentioned above, wherein one or more support devices according to the invention is/are mounted on the conveyor belt in order to transport single sheets or stacks of packaging material. All effects and advantages mentioned in connection with the support device also apply to the conveyor belt assembly and vice versa.

The number of support devices used in the conveyor belt assembly may be chosen freely. Exemplary conveyor belt assemblies comprise 50 to 250 support devices, for example 110 or 115.

The conveyor belt assembly is preferably used in or in conjunction with a laser cutting machine.

All support devices mounted on the conveyor belt may be generally identical. This leads to economical manufacturing and easy assembly of the support devices to the conveyor belt.

Alternatively, different groups of support devices are mounted on the conveyor belt, wherein the support devices belonging to the same group are generally identical and the support devices of different groups are different. A group of support devices has at least on member, i.e. one support device. In preferred embodiments two or three groups of embodiments are used in order to provide a conveyor belt assembly, which is adapted to different kinds of packaging material.

The invention will now be explained with reference to an embodiment which is shown in the attached drawings. In the drawings,
- Figure 1 shows a conveyor belt assembly according to the invention comprising a support device according to the invention in a partly exploded view,
- Figure 2 shows a more detailed view of a section of the conveyor belt assembly of Figure 1 in a perspective view,
- Figure 3 shows a support device of the conveyor belt assembly of Figure 1 in a separate perspective view,
- Figure 4 shows a detail IV of the support device of Figure 3,
- Figure 5 shows the support device of Figure 3 in a side view along direction V,
- Figure 6 shows a set of slats used in the support device of Figure 3,
- Figure 7 shows a detail VII of the support device of Figure 5, and
- Figure 8 shows a side view along direction VIII of a basic component of the support device of Figure 3 .

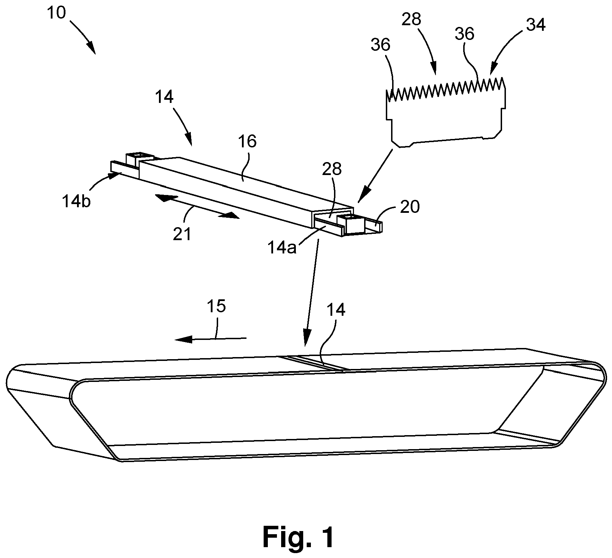

Figure 1 shows a conveyor belt assembly 10 for transporting single sheets or stacks of packaging material.

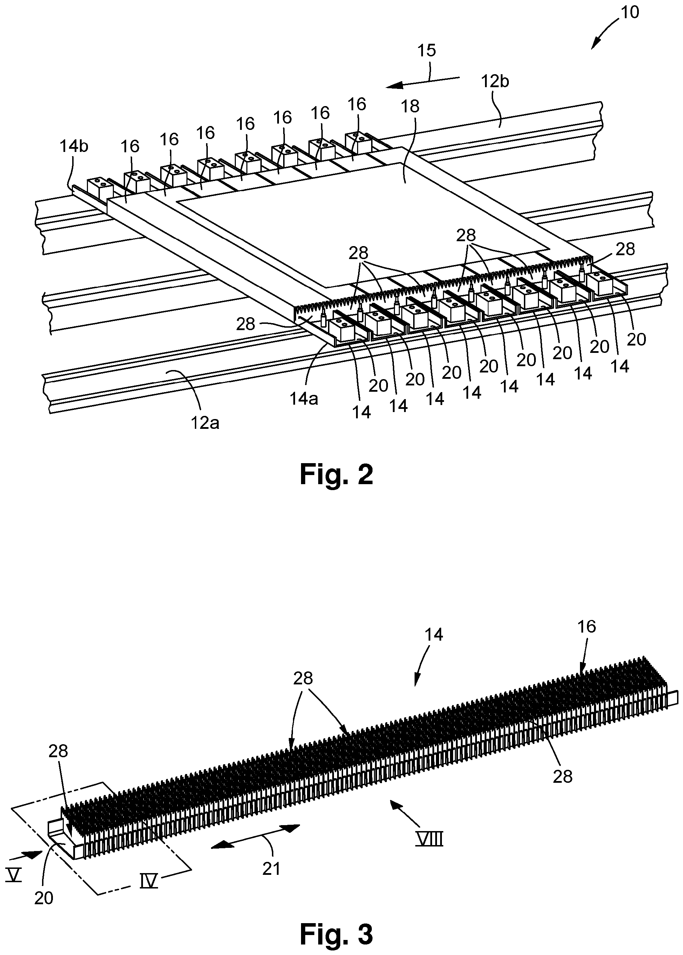

It comprises two conveyor belts 12a, 12b which are arranged in a substantially parallel manner (cf. Figure 2).

On the conveyor belts 12a, 12b a plurality of support devices 14 are mounted.

More precisely, a first end 14a of each of the support devices 14 is attached to a first conveyor belt 12a and a second end 14b of each of the support devices 14 is attached to a second conveyor belt 12b.

The support devices 14 extend substantially perpendicular to the conveyor belts 12a, 12b and a conveying direction 15.

The support devices 14 are substantially rigid and each of them provides a support surface 16 configured to support a single sheet 18 of packaging material (cf. Figure 2).

It is noted that the representation of the support surfaces 16 as white surfaces in Figures 1 and 2 is only due to the ease of representation. The nature of the support surface 16 will become clear from the following explanations.

It is further noted that the sheet 18 shown in Figure 2 is also representative of a stack of packaging material.

In the example shown in the Figures all support devices 14 are generally identical. An exemplary support device 14 will be explained in detail with reference to Figures 3 to 8.

The support device 14 comprises a basic component 20 having the form of a U-shaped profile generally extending along a direction 21.

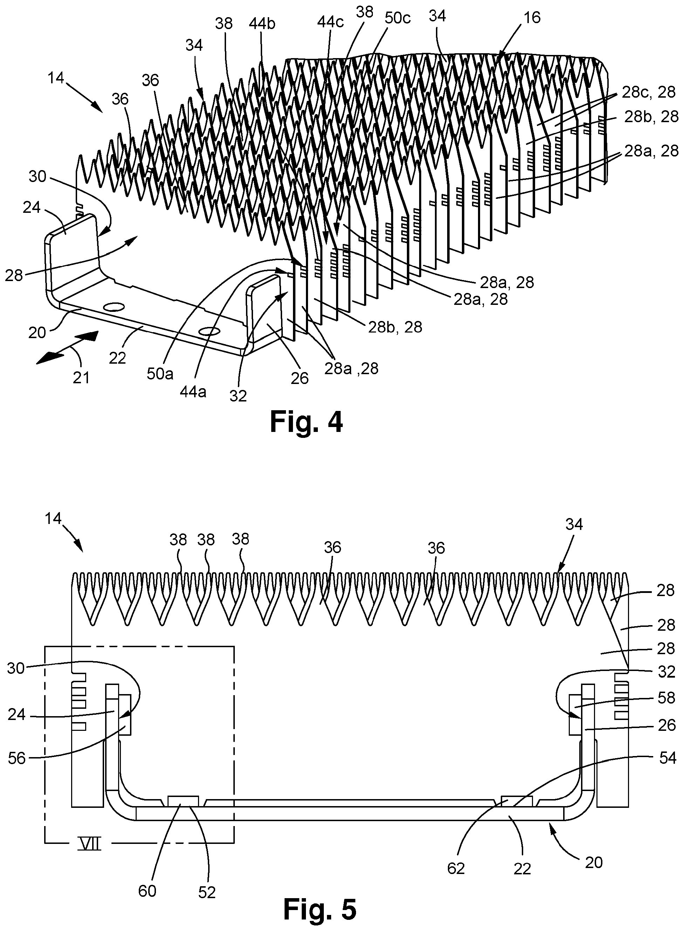

It comprising a base section 22, a first leg section 24 and a second leg section 26 (cf. Figures 4 and 5).

The first leg section 24 and the second leg section 26 extend from opposite ends of the base section 22 respectively.

A multitude of slats 28 is mounted on the basic component 20.

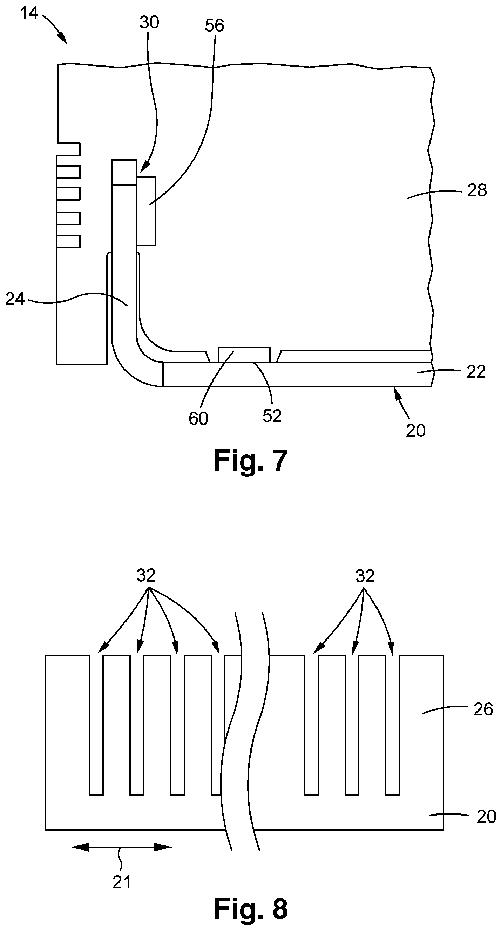

To this end a plurality of identical mounting slots 30 is provided on the first leg section 24 and a plurality of identical mounting slots 32 is provided on the second leg section (cf. Figures 3 and 8).

A portion of each slat 28 is received in the slots 30, 32 respectively.

As can best be seen from Figure 4, the mounting slots 30, 32 used for a given slat 28 are offset with respect to each other along the direction 21 of general extension of the basic component 20. Consequently, the slats 28 are oriented in a slightly tilted manner as compared to an orientation perfectly perpendicular to the direction 21 of general extension of the basic component 20.

The slats 28 are arranged in an upright position and spaced from each other such that respective side contour contact sections 34 of the slats form the substantially flat support surface 16 for supporting the single sheet 18.

In the example shown in the figures, the side contour contact section 34 of the slat 28 comprise teeth 36, wherein the tips 38 of the teeth 36 form the substantially flat support surface 16.

Three different types of slats 28 are used in the support device 14. They differ in the arrangement of the teeth 36 along the extension of the respective slat 28.

In more detail, the three different types of slats 28 differ with respect to a starting position of a respective tooth pattern being formed by the teeth 36, wherein the tooth pattern as such is identical for all types of slats 28.

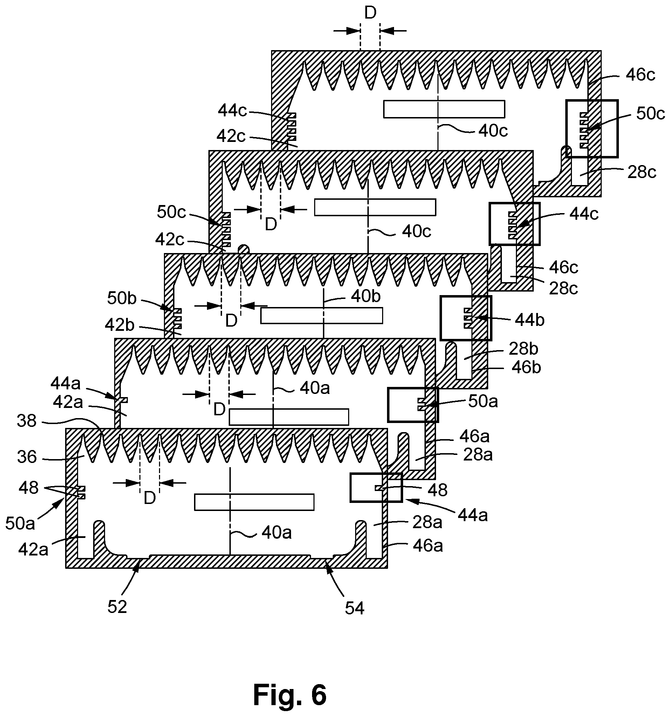

The teeth 36 are arranged within a distance D from one another (cf. Figure 6).

A first type of slats 28 is denoted slats 28a.

The teeth 36 of these slats are arranged non-symmetrically with respect to a slat middle axis 40a.

More precisely, the tooth tip 38 of the tooth 36 being arranged to the right of the slat middle axis 40a is arranged at a distance of 3/10 D from the middle axis.

The same is true for the tooth 36 adjacent to a left edge 42a of slat 28a. This tooth 36 is also positioned at a distance of 3/10 D from the left edge 42a. This position may be designated a starting position of the tooth pattern. The arrangement of the teeth is therefore designated a 3/10 D arrangement.

The type of the slat 28a is indicated by an indicator 44a being provided on a right edge 46a of the slat 28a and comprising one notch 48.

A further indicator 50a is provided on the left edge 42a comprising two notches 48.

The slat 28a can be mounted in two orientations on the basic component 20.

In the second orientation, which may be achieved by rotating the slat 28a by 180° around the slat middle axis 40a, the indicator 50a comprising two notches 48 is arranged on the right edge 46a and the indicator 44a comprising one notch 48 is arranged on the left edge 42a.

In the second orientation the tooth 36 being arranged adjacent to the slat middle axis 40a on the right side is located within a distance of 7/10 D from the slat middle axis 40a.

The same is true for the tooth 36 adjacent to a left edge 42a of slat 28a in the second orientation. This tooth 36 is also positioned within a distance of 7/10 D from the left edge 42a. Again, this position may be designated a starting position of the tooth pattern. The arrangement of the teeth in the second orientation is therefore designated a 7/10 D arrangement.

A second type of slat 28 is denoted slat 28b.

The teeth 36 of this slat 28b are arranged symmetrically with respect to a slat middle axis 40b.

More precisely, the tooth 36 being arranged adjacent to the slat middle axis 40b on the right side is located within a distance of 5/10 D (or 0,5 D) from the slat middle axis 40b.

The same is true for the tooth 36 adjacent to a left edge 42b of slat 28b in the second orientation. This tooth 36 is also positioned within a distance of 5/10 D (or 0,5 D) from the left edge 42b. As before, this position may be designated a starting position of the tooth pattern. The arrangement of the teeth is therefore designated a 5/10 D arrangement.

Thus, the arrangement of the teeth 36 cannot be altered by changing the orientation of the slat 28b.

In order to indicate its type the slat 28b comprises an indicator 44b on the right lateral edge 46b and an indicator 50b on its left lateral edge 42b. Both indicators 44b, 50b comprise three notches 48 and are thus identical.

A third type of slats 28 is denoted slats 28c.

The teeth 36 of these slats 28c are arranged non-symmetrically with respect to a slat middle axis 40c.

More precisely, the tooth tip 38 of the tooth 36 being arranged to the right of the slat middle axis 40c is arranged within a distance of 1/10 D from the middle axis 40c.

The same is true for the tooth 36 adjacent to a left edge 42c of slat 28c. This tooth 36 is also positioned within a distance of 1/10 D from the left edge 42c. Again, this position may be designated a starting position of the tooth pattern. The arrangement of the teeth is therefore designated a 1/10 D arrangement.

The type of the slat 28c is indicated by an indicator 44c being provided on a right edge 46c of the slat 28c and comprising four notches 48.

A further indicator 50c is provided on the left edge 42c comprising five notches 48.

The slat 28c can be mounted in two orientations on the basic component 20.

In the second orientation, which may be achieved by rotating the slat 28c by 180° around the slat middle axis 40c, the indicator 50c comprising five notches 48 is arranged on the right edge 46c and the indicator 44c comprising one notch 48 is arranged on the left edge 42c.

In the second orientation the tooth 36 being arranged adjacent to the slat middle axis 40c on the right side is located within a distance of 9/10 D from the slat middle axis 40c.

The same is true for the tooth 36 adjacent to a left edge 42c of slat 28c in the second orientation. This tooth 36 is also positioned within a distance of 9/10 D from the left edge 42c. This position may be designated a starting position of the tooth pattern. The arrangement of the teeth is therefore designated a 9/10 D arrangement.

In summary, a set of two slats 28a being provided in different orientations, one slat 28b and two slats 28c being provided in different orientations provides teeth in a 1/10 D arrangement, a 3/10 D arrangement, a 5/10 D arrangement, a 7/10 D arrangement, and a 9/10 D arrangement.

A plurality of set of slats 28 as represented in Figure 6 are arranged on the basic component 20 as can be seen from Figure 4. The correct arrangement of the slats 28 can be verified by checking the indicators 44a, 50a, 44b, 44c, 50c. if the slats 28 are arranged correctly, the sequence of the number of notches 48 is 1-2-3-4-5-1-2-3-4-5 etc.

It is understood that in the above example, the tooth pattern could also be shifted by 1/10 D to the left such that teeth may be provided in a 0/10 D arrangement, a 2/10 D arrangement, a 4/10 D arrangement, a 6/10 D arrangement, and a 8/10 D arrangement.

In an alternative example in which only two types of slats are provided on which the teeth are arranged in a non-symmetrical manner, a first type of slats could provide teeth in a 1/8 D arrangement when in a first orientation and in a 7/8 D arrangement when in a second orientation.

A second type of slats could provide teeth in a 3/8 D arrangement when in a first orientation and in a 5/8 D arrangement when in a second orientation.

In another example three types of slats having a non-symmetric arrangement of teeth may be used. A first type of slats could provide teeth in a 1/12 D arrangement when in a first orientation and in a 11/12 D arrangement when in a second orientation. A second type of slats could provide teeth in a 3/12 D arrangement when in a first orientation an in a 9/12 D arrangement when in a second orientation. A third type of slats could provide teeth in a 5/12 D arrangement when in a first orientation and in a 7/12 D arrangement when in a second orientation.

In all of the above described examples, the teeth 36 of neighboring slats 28 are shifted with respect to each other when being regarded along a direction of general extension of the basic component 20 (cf. Figure 5).

In order to precisely position the slats 28 in a vertical direction, each slat comprises two abutment surfaces 52, 54 which abut against the base section 22 of the basic component 20 (cf. Figures 5 and 7).

All slats 28 are additionally fixed by a total of four glue lines 56, 58, 60, 62 to the basic component 20, wherein glue line 56 connects the slat 28 to the first leg section 24 and glue line 58 connects the slat 28 to the second leg section 26.

Glue line 60 connects the slat 28 to the base section 22 in the area of abutment surface 52 and glue line 62 connects the slat 28 to the base section 22 in the area of abutment surface 54.

Due to the fact that the slats 28 are mounted on the base component 20 in a tilted manner and due to the fact that the teeth 36 on neighboring slats 28 are shifted with respect to one another, only very few tooth tips 38 are arranged such that they are coincide with a line located in the support surface 16. Consequently, processing of the sheet 18 is not at all or to a very minor degree influenced by the presence of tooth tips 38 in a processing zone. This is especially the case for a line extending along a direction 21 of general extension of the basic component 20 and a line extending perpendicularly thereto.

This is especially true if the support device 14 is used in a laser cutting machine. A cutting line being parallel to the support surface can be freely chosen without the need to consider the positions of the tooth tips 38.

It is understood that it is easily possible to create different kinds of support devices by using different kinds of slats and/or by arranging the slats in a different manner on the basic component. Consequently, different support devices can easily be provided. As an alternative to a conveyor belt assembly comprising substantially identical support devices, it is thus also possible to provide different groups of support devices the conveyor belts, wherein the support devices belonging to the same group are generally identical and the support devices of different groups are different.

It is finally noted that in cases where one part or element is represented more than once in a given Figure, only exemplary parts or elements are designated with a reference sign. This is done for the sole purpose of improving legibility of the Figures.

## Claims

1. Support device (14) for storing or transporting single sheets (18) or stacks of a packaging material, comprising
a basic component (20) having the form of a U-shaped profile comprising a base section (22), a first leg section (24) and a second leg section (26), wherein the first leg section (24) and the second leg section (26) extend from opposite ends of the base section (22) respectively and wherein on the first leg section (24) and on the second leg section (26) a plurality of identical mounting slots (30, 32) are provided respectively, and
a multitude of slats (28) being mounted on the basic component (20) such that a portion of each of the slats (28) is received in one of the mounting slots (30) on the first leg section (24) and one of the mounting slots (32) on the second leg section (26),
wherein the slats (28) are arranged in an upright position and spaced from each other such that respective side contour contact sections (34) of the slats (28) form a substantially flat support surface (16) configured for supporting the single sheets (18) or stacks of packaging material, and
wherein the multitude of slats (28) comprises at least two different types of slats (28a, 28b, 28c), each slat (28) being provided with at least one indicator (44a, 44b, 44c, 50a, 50b, 50c) indicating its type.

2. Support device (14) according to claim 1, **characterized in that** the side contour contact sections (34) of the slats (28) comprise teeth (36), wherein tips (38) of the teeth (36) form the substantially flat support surface (16), and wherein the at least two different types of slats (28a, 28b, 28c) differ in the arrangement of the teeth (36) along the respective slat (28a, 28b, 28c).

3. Support device (14) according to claim 2, **characterized in that** the at least two different types of slats (28a, 28b, 28c) differ with respect to a starting position of a respective tooth pattern, especially wherein the tooth pattern as such is identical for both types of slats (28a, 28b, 28c).

4. Support device (14) according to claim 2 or 3, **characterized in that** the teeth (36) of neighboring slats (28) are shifted with respect to each other when being regarded along a direction (21) of general extension of the basic component (20).

5. Support device (14) according to any one of claims 2 to 4, **characterized in that** slats (28) of at least one type comprise teeth (36) being arranged symmetrically with respect to a slat middle axis (40a, 40b, 40c).

6. Support device (14) according to claim 5, **characterized in that** two identical indicators (44a, 44b, 44c, 50a, 50b, 50c) are provided on opposite ends of the slat (28) respectively.

7. Support device (14) according to any of claims 2 to 6, **characterized in that** slats (28) of at least one type comprise teeth (36) being arranged non-symmetrically with respect to a slat middle axis (40a, 40c), especially wherein slats (28) of at least two types comprise teeth (36) being arranged non-symmetrically with respect to a slat middle axis (40a, 40c).

8. Support device (14) according to claim 7, **characterized in that** slats (28) of a type comprising teeth (36) which are arranged non-symmetrically with respect to the slat middle axis (40a, 40c) are mountable on the basic component (20) in two orientations.

9. Support device (14) according to claim 8, **characterized in that** two different indicators (44a, 44c, 50a, 50c) are provided, each of which corresponding to one orientation in which the slat (28) is mountable.

10. Support device (14) according to any of the preceding claims, **characterized in that** the indicator (44a, 44b, 44c, 50a, 50b, 50c) comprises one or more notches (48) being positioned at a lateral edge (42a, 42b, 42c, 46a, 46b, 46c) of the respective slat (28) when being regarded in its mounted position.

11. Support device (14) according to claim 10, **characterized in that** a type of slat (28) is indicated by a corresponding number of notches (48).

12. Support device (14) according to claim 10, **characterized in that** each indicator (44a, 44b, 44c, 50a, 50b, 50c) comprises one single notch (48), wherein a type of slat (28) is indicated by a corresponding width or position of the notch (48).

13. Conveyor belt assembly (10) comprising at least one conveyor belt (12a, 12b), wherein one or more support devices (14) according to the preceding claims is/are mounted on the conveyor belt (12a, 12b) in order to transport single sheets (18) or stacks of packaging material and wherein a conveying direction (15) is generally perpendicular to a direction (21) of general extension of the basic component (20).

14. Conveyor belt assembly (10) according to claim 13, **characterized in that** all support devices (14) mounted on the conveyor belt (12a, 12b) are generally identical.

15. Conveyor belt assembly (10) according to claim 13, **characterized in that** different groups of support devices (14) are mounted on the conveyor belt (12a, 12b), wherein the support devices (14) belonging to the same group are generally identical and the support devices (14) of different groups are different.
